(19) Europäisches Patentamt
European Patent Office
Office européen des brevets

(11) Veröffentlichungsnummer: **0 000 061**
**B1**

(12) **EUROPÄISCHE PATENTSCHRIFT**

(21) Anmeldenummer: **78100104.5**

(22) Anmeldetag: **06.06.78**

(51) Int. Cl.³: **C 07 F 9/38**, C 07 F 9/30, C 08 K 5/49, C 04 B 13/24, D 06 M 13/26, C 02 F 1/54

(54) **Phosphorhaltige Carbonsäure-Derivate, Verfahren zu deren Herstellung, sowie ihre Verwendung**

(30) Priorität: **14.06.77 CH 7299/77**

(43) Veröffentlichungstag der Anmeldung:
**20.12.78 Patentblatt 78/01**

(45) Bekanntmachung des Hinweises auf die Patenterteilung:
**15.10.80 Patentblatt 80/21**

(84) Benannte Vertragsstaaten:
**BE CH DE FR GB NL**

(56) Entgegenhaltungen:
**DE - A - 1 768 759**
**FR - A - 2 338 948**
**FR - A - 2 368 496**

**RUSSIAN CHEMICAL REVIEWS 44(6), 1975**
**Seiten 468—480**

(73) Patentinhaber: **HOECHST AKTIENGESELLSCHAFT**
**Postfach 80 03 20**
**D - 6230 Frankfurt/Main 80 (DE)**

(72) Erfinder: **Thamm, Horst Dieter, Dr.**
**Parkstrasse 25**
**D - 6233 Kelkheim (Taunus) (DE)**
**Linke, Fritz. Dr.**
**Im Flemetz 8**
**D - 6240 Königstein Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Phosphorhaltige Carbonsäure-Derivate, Verfahren zu deren Herstellung, sowie ihre Verwendung

Von russischen Autoren ist die Addition von Methandiphosphonsäuretetraäthylester an verschiedene olefinisch ungesättigte Verbindungen in Gegenwart alkalischer Katalysatoren — insbesondere von Natriumäthylat — beschrieben worden (A.N. Pudovik, G.E. Yastrebovs, Zh Obsch. Khim. *40,* 499, 1970). Im Falle der Verwendung beispielsweise des Acrylnitrils als olefinisch ungesättigter Verbindung soll ein Addukt aus 1 Mol Methandiphosphonsäuretetraäthylester und 2 Mol Acrylnitril erhalten worden sein; mit anderen olefinisch ungesättigten Verbindungen wie etwa dem Vinylphosphonsäurediäthylester und dem Acrylsäuremethylester soll nur das Monoadditionsprodukt, also das Produkt aus 1 Mol Methandiphosphonsäuretetraäthylester und 1 Mol der ungesättigten Verbindung, entstanden sein. Wozu die erhaltenen Verbindungen verwendet werden, ist aus der russischen Arbeit nicht ersichtlich.

Eine weitere russische Arbeit [T.Ya. Medved et al, Russian Chemical Reviews 44 (6), 1975, 468 bis 79] beschäftigt sich mit Alkylen-, insbesondere Methylen-diphosphin-dioxiden und mit deren Verwendung u.a. als Komplexbildner. Unter den Reaktionen des Methylen-bis-(diphenylphosphinoxids) ist u.a. die Reaktion mit Acrylsäuremethylester zu 4,4-Bis-diphenylphospinoxido-propionsäure-äthylester erwähnt.

Mit dieser Verbindung nur entfernt ähnliche gem. Diphosphonate und Polyphosphonate sollen nach der DE-A 1 768 759 in Form der Sn(II)-Salze in oralen Zusammensetzungen zur Verhütung von Karies und Zahnsteinbildung in Mundpflegemitteln, Kaugummis etc. Verwendung finden.

In dem Bestreben, die von den russischen Autoren beschriebene, interessant erscheinende Reaktion für synthetische Zwecke weiter auszubauen und auch sinnvolle Einsatzgebiete für die nach der Reaktion erhältlichen Verbindungen zu erschließen, wurde auch bereits vorgeschlagen (Patentanmeldung P 2647042.8 — HOE 76/F 248), unter dem Einfluß alkalischer katalysatoren ganz allgemein 1 Mol Methandiphosphonsäuretetraälkylester mit 2 Mol Acrylsäureester zur Reaktion zu bringen. Die erhaltenen Di-Addukte sind neue Phosphoncarbonsäurederivate, welche unter anderem ausgezeichnete Weichmacher für Polyvinylchlorid darstellen. Die entsprechenden freien Phosphoncarbonsäuren und ihre Salze, insbesondere die Alkali- und Ammoniumsalze, sind unter anderem wertvolle Gipsabbinde-Verzögerer und Komplexbildner für verschiedene Metallionen.

Die Formel der genannten Di-Addukte ist:

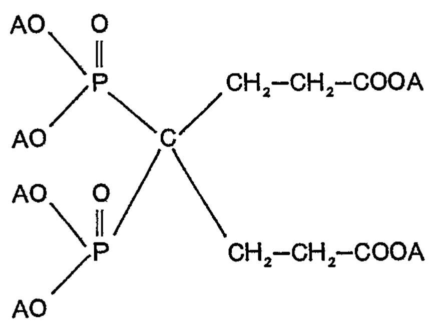

worin die Reste A, welche gleich oder verschieden sein können, die folgende Bedeutung haben:

Alkylreste, vorzugsweise solche mit 1—18, insbesondere solche mit 1—8,
C-Atomen, welche noch durch Halogen (vorz. Cl und/oder Br) substituiert, vorzugsweise, 1—3 x substituiert sein können,

Wasserstoff,

Alkali-(vorz. Na- und K-) und $NH_4$-Ionen.

Diese Verbindungen, welche als Derivate der 3,3-Diphosphonopimelinsäure aufzufassen sind, bzw. — wenn R=H— die 3,3-Diphosphonopimelinsäure selbst ist, werden nach dem in der genannten Patentanmeldung vorgeschlagenen Verfahren hergestellt durch Umsetzung von Methandiphosphonsäuretetraalkylestern der Formel

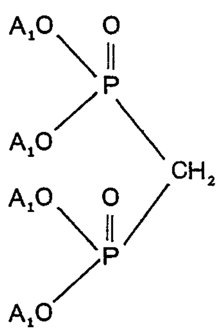

mit Acrylsäureestern der Formel

$$CH_2{=}CH{-}COOA_1$$

wobei in beiden Formeln

die Reste $A_1$, welche gleich oder verschieden sein können, die gleichen — gegebenenfalls halogensubstituierten — Alkylreste wie in der Formel der Di-Addukte für A angegeben, bedeuten,

im Molverhältnis etwa 1:2

in Gegenwart stark basischer Katalysatoren

bei Temperaturen von etwa 0°—140°, vorzugsweise etwa 20°—100° und insbesondere etwa 40°—80°C.

Die Umsetzung läuft nach folgender Summengleichung ab:

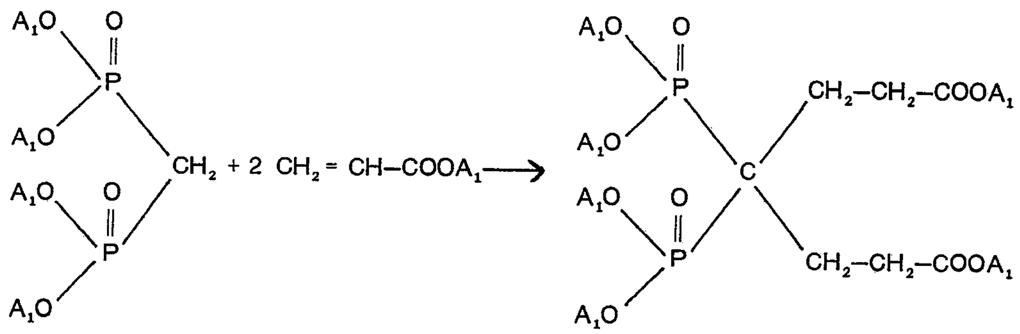

Man erhält so zunächst die Ester der 3,3-Diphosphono-pimelinsäure, d.i. diejenigen Di-Addukte der hierfür angegebenen Formel, bei denen A nur die — gegebenenfalls halogensubstituierten-Alkylreste, nicht aber H und die Alkali- oder Ammoniumionen bedeutet. Die Ester können gewünschtenfalls in bekannter Weise zu anderen Estern umgeestert werden. Die freie Säure sowie die Alkali- und Ammoniumsalze werden aus den Estern in ebenfalls bekannter Weise durch saure oder alkalische Verseifung erhalten.

Die saure Verseifung wird besonders vorteilhaft nach dem in der Patentanmeldung P 2719415.6 = HOE 77/F 089 vorgeschlagenen Verfahren durch Erhitzen mit der mindestens etwa 6-fachen molaren Menge einer niederen aliphatischen Carbonsäure oder mit Benzoesäure, ggf. in Gegenw. katalytischer Mengen starker Säuren oder Basen, durchgeführt.

Die saure Verseifung wird besonders vorteilhaft nach dem in der Patentanmeldung P 2719415.6 = HOE 77/F 089 vorgeschlagenen Verfahren durch Erhitzen mit der mindestens etwa 6-fachen molaren Menge einer niederen aliphatischen Carbonsäure oder mit Benzoesäure, ggf. in Gegenw. katalytischer Mengen starker Säuren oder Basen, durchgeführt.

In Fortführung der Arbeiten gemäß Patentanmeldung P 2647042.8 wurde nun durch eine weitere Variante der von den eingangs erwähnten russischen Arbeiten sowie der in der Patentanmeldung P 2647042.8 beschriebenen Reaktionen eine Anzahl neuer wertvoller phosphorhaltiger Verbindungen gefunden. Dies sind phosphorhaltige Carbonsäure-Derivate der allgemeinen Formel

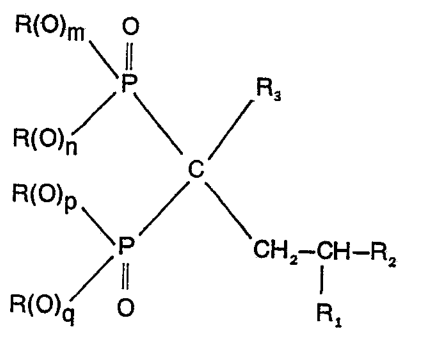

(I)

in der

R = gleicheoder verschiedene Reste aus der Gruppe H,

($C_1$—$C_{20}$)-Alkyl, ($C_2$—$C_8$)-Alkenyl, beide gegebenenfalls substituiert, vorzugsweise bis zu dreimal, insbesondere einmal durch Halogen, insbesondere Cl, Br,

($C_5$—$C_6$)-Cycloalkyl,

Phenyl oder Phen-($C_1$—$C_4$)-alkyl, beide gegebenenfalls im Ring substituiert, vorzugsweise bis zu dreimal substituiert durch Halogen (vorzugsweise Cl, Br) oder ($C_1$—$C_4$)-Alkyl,

ein Alkali- oder Ammonium-Kation, vorzugsweise Na, K,

wobei jedoch R nicht H oder ein Kation ist, wenn das zugehörige m, n, p oder q = 0 ist,

$R_1$ = H, $(C_1—C_4)$-Alkyl,
$R_2$ = CN, $COOR_4$, $CONR_5R_6$, $CONH_{2-x}(CH_2OH)_x$ (x = 1 oder 2)
$R_3$ = H oder eine Gruppe

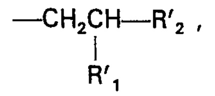

in der $R'_1$ und $R'_2$ Bedeutungen wie für $R_1$ und $R_2$ beschrieben besitzen,

$R_4$ = Bedeutungen, wie für R beschrieben, hat und

$R_5$, $R_6$ = H, $(C_1—C_{20})$-Alkyl oder Phenyl, beide gegebenenfalls durch Halogen (vorzugsweise Cl, Br) und/oder $(C_1—C_4)$-Alkyl substituiert, vorzugsweise bis zu dreimal substituiert, und

m, n, p, q = unabhängig voneinander die Zahlen 0 oder 1 mit der Einschränkung, daß für $R_2$ = CN oder $COOR_4$ nicht alle, m, n, p, q = 1 sein dürfen sowie daß für dne Fall $R = C_6H_5$ und m = n = p = q $R_3 \neq$ H.

Bevorzugt sind, R, $R_4$, $R_5$, $R_6$ = H oder Alkylgruppen.

Bevorzugt sind unter den für die Reste R bis $R_6$ genannten Alkylgruppen solche mit 1—4 C-Atomen, insbesondere Methyl und Aethyl sowie Cl-Aethyl.

Bevorzugt als Reste $R_2$ bzw. $R'_2$ sind CN, $CONH_2$ und $CONH_{2-x}(CH_2OH)_x$.

Von den unter die Formel I fallenden Verbindungen werden in beispielhafter Weise folgende genannt:

3,3-Di-(methylphosphinsäureäthylester)-pimelinsäuredimethylester
3,3-Di-(2-chloräthylphosphinsäureäthylester)-pimelinsäuredi-isopropylester
3,3-Di-(phenylphosphinsäureäthylester)-pimelinsäuredi-n-oktylester
3,3-Di-(methylphosphinsäure-2-chloräthylester)-pimelinsäurediäthylester
3,3-Di(methylphospinsäure-isobutylester)-pimelinsäuredi-decylester
3,3-Di-(phenylphosphinsäure-n-oktylester)-pimelinsäuredi-n-oktylester
3-Dimethylphosphinoxido-3-diäthylphosphono-pimelinsäuredimethylester
3-Diphenylphosphinoxido-3-diäthylphosphono-pimelinsäuredi-laurylester
3-Diphenylphosphinoxido-3-methylphosphinsäuremethyl-pimelinsäuredi-n-butylester
3-Dimethylphosphinoxido-3-phenylphosphinsäuremethyl-pimelinsäuredi-cetylester
3,3-Bis-dimethylphosphinoxido-pimelinsäuredilaurylester
3,3-Di-(methylphosphinsäureäthylester)-pimelinsäuredinitril
3,3-Di-(phenylphosphinsäure-n-butylester)-pimelinsäuredinitril
3-Diphenylphosphinoxido-3-dimethylphosphono-pimelinsäuredinitril
3-Dimethylphospinoxido-3-phenylphosphinsäure-n-butylester-pimelinsäuredinitril
3,3-Bis-diphenylphosphinoxido-pimelinsäuredinitril
3-Dimethyl-3-diphenylphosphinoxidopimelinsäuredinitril
3,3-Bis-(diäthylphosphono)-pimelinsäuredicarbonamid
3,3-Bis-(di-2-chloräthylphosphono)-pimelinsäure-N-methylcarbonamid
3,3-Bis-(diäthylphosphono)-pimelinsäuredi-N-phenylcarbonamid
3,3-Di-(methylphosphinsäureäthylester)-pimelinsäuredicarbonamid
3-Dimethylphosphinoxido-3-diäthylphosphono-pimelinsäuredicarbonamid
3-Diphenylphosphinoxido-3-phenylphosphinsäuremethylester-pimelinsäuredicarbonamid
3,3-Di-methylphospino-pimelinsäure
3-Methylphosphino-3-dimethylphosphinoxidopimelinsäure
3,3-Bis-(dimethylphosphinoxido)-pimelinsäure
3-Methylphosphino-3-phosphono-pimelinsäure
3-Dimethylphosphinoxido-3-phosphono-pimelinsäure
1-Carbäthoxypropan-3,3-di-methylphosphinsäuremethylester
1-Carbäthoxypropan-3-diphenylphosphinoxido-3-phenylphosphinsäureäthylester
1-Carbonamidopropan-3-diäthylphosphono-3-dimethylphosphinoxid.

Formelmäßig seien in beispielhafter Weise noch die folgenden weiteren Verbindungen aufgeführt:

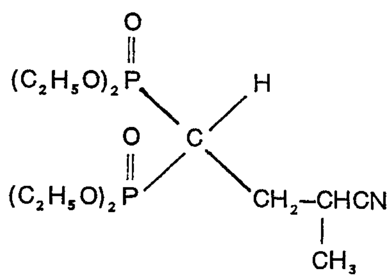

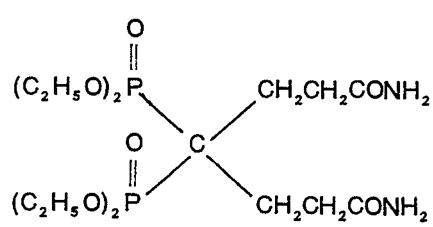

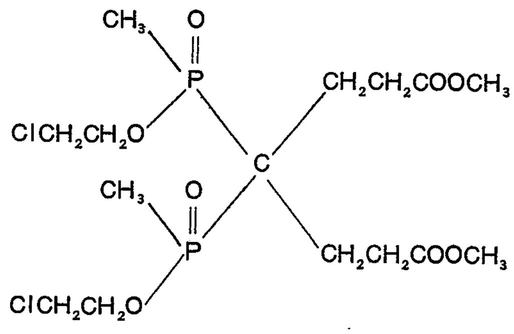

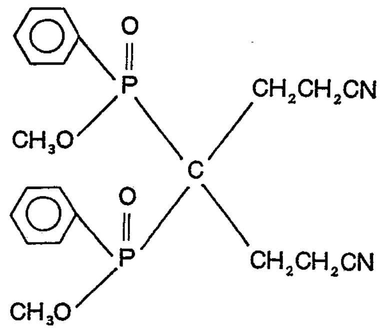

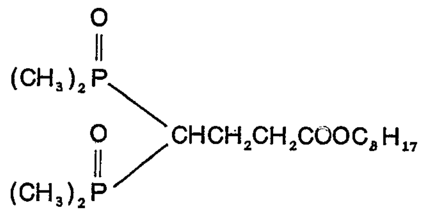

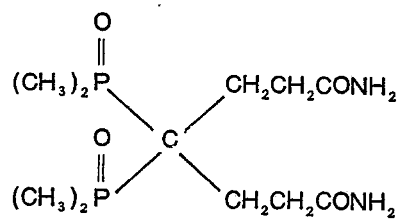

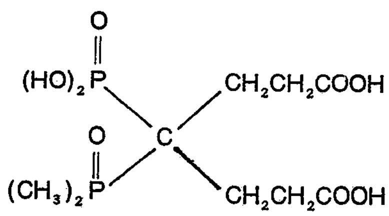

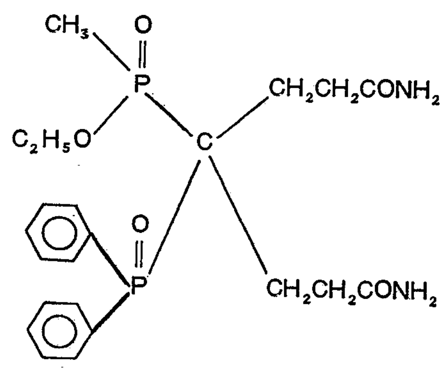

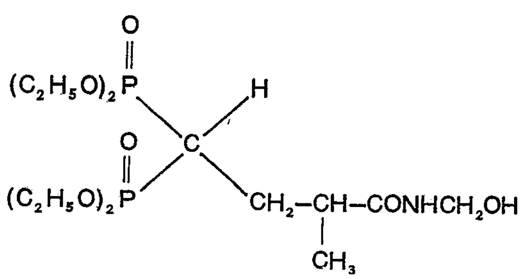

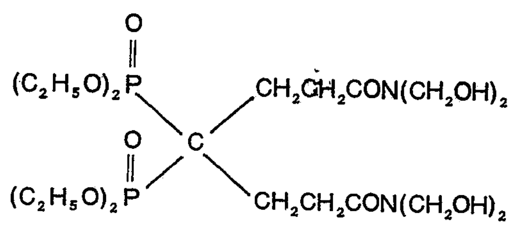

Die neuen phosphorhaltigen Carbonsäurederivate werden erfindungsgemäß dadurch hergestellt, daß man Verbindungen der allgemeinen Formel

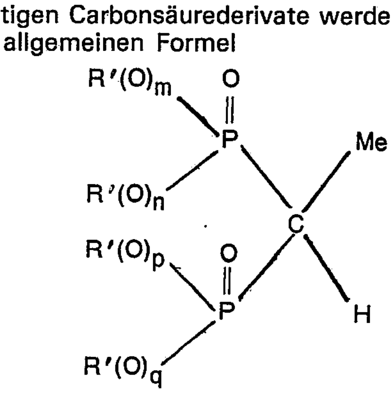

(II)

in der R′ = R aber ≠ H; m, n, p, q unabhängig voneinander 0 oder 1 sind und Me Wasserstoff oder ein Alkaliatom (vorzugsweise Li, Na) bedeutet, gegebenenfalls in einem inerten Lösungsmittel mit Verbindungen der Formel

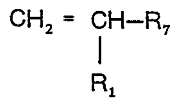 (III)

in der $R_1$ die Bedeutung aus Formel I hat und $R_7$ CN, $COOR_4$, $CONR_5R_6$, vorzugsweise CN oder $COOR_4$ bedeutet, gegebenenfalls (für Me = H) in Gegenwart stark basischer Katalysatoren, bei Temperaturen von ca. 0° bis 140°C umsetzt, eine dabei erhaltene Verbindung mit einer C—Me-Gruppierung (Me = Alkali) zu einer Verbindung mit einer C—H-Gruppierung verseift und gegebenenfalls, aber jedenfalls für m = n = p = q = 1, eine Nitril- oder Carbonestergruppe in an sich bekannter Weise in eine andere Gruppe $R_2$, vorzugsweise eine, gegebenenfalls N-substituierte, Carbonamid-Gruppe überführt und ggf. die so erhaltene Carbonamid-gruppe mit Formaldehyd methylolisiert.

Die als Ausgangsstoffe der Reaktion zu verwendenden Methylenverbindungen der allgemeinen Formel II (Me = H) können nach unterschiedlichen literaturbekannten Verfahren synthetisiert werden, z.B.

a) durch Umsetzung von Trialkylphosphiten oder Alkyl-(Aryl)-phosphonigsäuredialkylestern mit Halogenmethanphosphinsäurealkyl-(aryl-)estern oder Halogenmethanphosphonsäureestern oder tertiären Halogenmethylphosphinoxiden unter Abspaltung der entsprechenden Alkylhalogenide, oder

b) durch Reaktion von Alkalidialkyl-(aryl-)phosphiten bzw. Alkalidialkyl-(aryl-)phosphinoxiden mit Halogenmethanphosphonsäurediestern, Halogenmethanphosphinsäureestern und tertiären Halogenmethylphosphinoxiden unter Eliminierung der Alkalihalogenide.

Die auf diese Weise erhaltenen Produkte fallen in geeigneter Reinheit an oder lassen sich nach Entfernung von Nebenprodukten destillativ leicht reinigen.

Als Beispiele für Methylenphosphorverbindungen der Formel II seien im einzelnen genannt:

Methandiphosphonsäuretetramethylester, -tetraäthylester, -tetra-2-chloräthylester, -tetrahexylester,
Methan - bis - methylphosphinsäuremethylester, -bis - methylphosphinsäure - 2 - chloräthylester, -bisphenylphosphinsäure-isobutylester,
Methanphosphonsäure-diäthyl-methylphosphinsäureester, -dihexylphenylphosphinsäure-2-chloräthylester,
Methan - dimethylphosphinoxido - phosphonsäuredimethylester, -diphenylphosphinoxido - phosphonsäure-di-2-chloräthylester,
Methan - dimethylphosphinoxido - methylphosphinsäureäthylester, -diphenylphosphinoxidophenylphosphinsäure-isobutylester,
Methan-bis-dimethylphosphinoxid,
Methan-bis-diphenylphosphinoxid.

Zur Herstellung von Verbindungen der Formel II mit Me = Alkali werden die so erhaltenen Verbindungen in an sich bekannter Weise an der Methangruppierung metalliert. Geeignete Metallierungsmittel sind die Alkali-Metalle und ihre Hydride, insbesondere Li, Na, LiH, NaH.

Die bei der Durchführung der Reaktion einzusetzenden olefinisch ungesättigten Verbindungen der allgemeinen Formel III sind bekannt und werden z.T. großtechnisch hergestellt. Als Beispiele seien im einzelnen genannt:

Acrylsäuremethylester, -äthylester, -isopropylester, -nitril, Methacrylsäurenitril, Acrylsäureamid, Methacrylsäureamid.

Als Reaktionskatalysatoren werden starke Basen wie z.B. Alkalialkoholate, -hydride, -amide, quartäre Ammoniumhydroxyde eingesetzt. Bevorzugt sind vor allem Alkalialkoholate, ferner Alkalihydride und -amide. Insbesondere bevorzugt sind die Na- und die K-Verbindungen. Bei Verwendung von Verbindungen der Formel II mit Me = Alkali erübrigt sich die Verwendung weiterer basischer Katalysatoren.

Die erfindungsgemäße Umsetzung kann sowohl in Abwesenheit als auch in Gegenwart eines Lösungs- oder Verdünnungsmittels durchgeführt werden; geeignet als Lösungsmittel sind alle unter den Reaktionsbedingungen inerten organischen Lösungsmittel wie aliphatische und aromatische Kohlenwasserstoffe, z.B. n-Pentan, n-Hexan, Decan, Toluol, Xylol, Aether wie z.B. Tetrahydrofuran, Diäthyläther, Diisopropyläther, Dioxan, und für Me = H auch Alkohole wie z.B. Methanol, Aethanol, Isopropanol.

Die Reaktionstemperaturen können in einem größeren Bereich variiert werden; im allgemeinen arbeitet man zwischen etwa +20° und +100°C, speziell zwischen etwa +40° und +80°C. Da die Additionsreaktion exotherm verläuft, ist unter Umständen eine gute Kühlung erforderlich.

Bei der Durchführung des erfindungsgemäßen Verfahrens werden die Reaktionspartner (II) und (III) vorzugsweise im Verhältnis von ca. 1:2 (Me = H) oder 1:1 (Me = Alkali) gemischt. Ein Überschuß der Komponente III bis ca. 10% ist möglich; größere Mengen sind möglich, aber ohne Vorteil. Anschließend wird (für Me = H) der basische Katalysator (z.B. Natriummethylat in methanolischer Lösung), im allgemeinen ca. 0,01 bis 0,25 Mol pro Mol Verbindung II, zugegeben.

Die Reaktionstemperatur bzw. die Reaktionsgeschwindigkeit kann sowohl durch Außenkühlung als auch durch die Dosiergeschwindigkeit des Katalysators reguliert werden.

Die Addukte I werden gemäß dem erfindungsgemäßen Verfahren in genügender Reinheit gebildet, so daß sie — nach Abdestillieren flüchtiger Anteile im Vakuum — direkt weiterverarbeitet werden können.

Die Entfernung der Katalysatoranteile, insbesondere bei den langkettigen Carbonsäureestern erfolgt zweckmäßigerweise durch Behandeln mit Wasser/Aktivkohle und ist erforderlich bei der Verwendung dieser Addukte als Weichmacher für PVC. Die Verseifung der erhaltenen Verbindungen mit Me = Alkali zu den entsprechenden N-Verbindungen erfolgt in an sich bekannter Weise durch Behandeln mit Wasser oder wäßriger Säure. Diese Addukte mit Me=4 lassen sich mit einem weiteren Mol III in weitere Verbindungen I* Die Überführung der Addukte ($R_2$ = CN, $COOR_4$) im die substituierten Carbonsäuren erfolgt nach an sich bekannten Verfahren z.B. durch längere Einwirkung von wasserfreiem Chlorwasserstoff bei Temperaturen von etwa 130° bis 160°C, gegebenenfalls unter Druck, durch längeres Kochen mit wäßriger Salzsäure unter Rückflußbedingungen bei Temperaturen von etwa +70° bis +110°C, oder durch Umsetzung mit mindestens der stöchiometrisch erforderlichen Menge Wasser in Gegenwart der freien Säuren bei Temperaturen von etwa 160° bis 250°C unter Abdestillieren der gebildeten flüchtigen Anteile.

Nach beendeter Acidolyse liegen die erfindungsgemäßen substituierten Carbonsäuren, gegebenenfalls gelöst in Salzsäure oder Wasser, vor und können durch Abdestillieren von Wasser und/oder Salzsäure im Vakuum und bei Temperaturen bis zu etwa +150°C in wasserfreier Form erhalten werden.

Besonders vorteilhaft kann die Acidolyse auch analog dem in der Patentanmeldung P 2719415.6 vorgeschlagenen Verfahren durch Erhitzen mit niederen aliphat. Carbonsäuren (HCOOH, $CH_3COOH$, $C_2H_5COOH$ etc.) oder mit Benzoesäure durchgeführt werden.

Die wäßrig-alkalische Verseifung der Ester der Formel I führt in an sich bekannter Weise zu den Salzen der Formel I (R, $R_4$ = Alkali, Ammonium), wobei auch eine stufenweise Verseifung möglich ist. Die unter die Formel I fallenden Verbindungen sind durch bekannte Operationen ineinander überführbar.

Die im Formelbild I dargestellten substituierten Carbonsäuren (d.h. $R_2$ = COOH) lassen sich z.B. durch saure Hydrolyse der Nitrile ($R_2$ = CN) darstellen. Es ist jedoch schwierig, selektiv eine Hydrolyse der Nitrilgruppe durchzuführen, ohne daß gleichzeitig eine Hydrolyse der Phosphondiester- bzw. Phosphinestergruppierung erfolgt. Vorteilhaft wählt man deshalb ein Verfahren, das den Weg über das entsprechende Carbonsäureamid und die nachfolgende Behandlung mit salpetriger Säure nach dem folgenden Schema erforderlich macht:

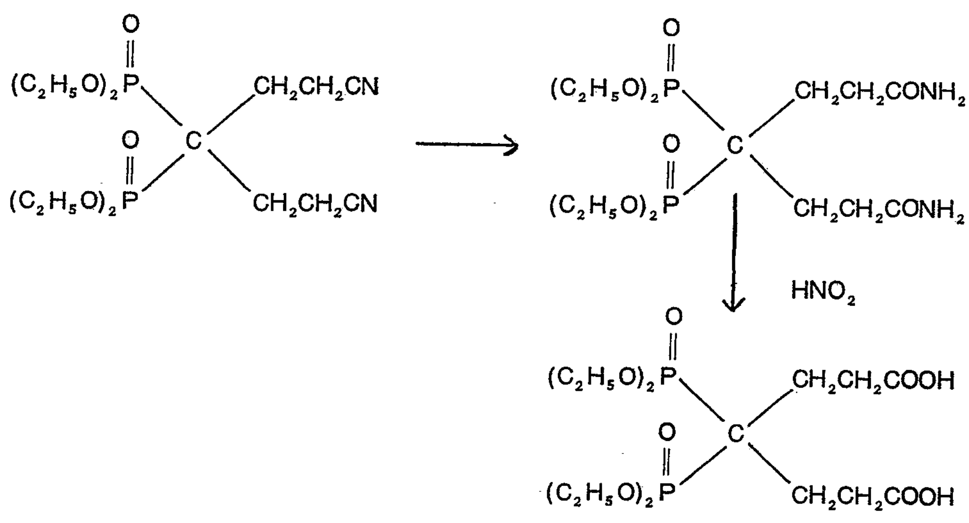


Die (substituierten) Carbonsäureamide der Formel I lassen sich in technisch einfacher Weise unter schonenden Bedingungen nach an sich bekannten Verfahren aus den analogen Carbonsäurenitrilen durch Umsetzung mit Wasserstoffperoxid/Natronlauge erhalten. Gleichfalls führt auch die Umsetzung der substituierten Carbonsäureester mit Ammoniak bzw. substituierten Aminen bei 20°—100°C, gegebenenfalls unter Druck, zu den unsubstituierten bzw. substituierten Carbonsäureamiden.

Diese Produkte fallen durch diese Operation in hoher Reinheit an und können direkt weiterverwendet werden.

Die Verbindungen der Formel I sind vielseitig verwendbare wertvolle Produkte. Die Ester der Formel I (wobei R und $R_4$ = die in der Legende zur Formel angegebenenorganischen Reste sind), insbesondere die langkettigen, lassen sich als Weichmacher für Kunststoffe, insbesondere für Polyvinyl-

* überführen

chlorid, verwenden. Sie verleihen den so dotierten Massen zudem ausgezeichnete flammhemmende bzw. selbstverlöschende Eigenschaften.

Die Säuren und Salze der Formel I (R und $R_4$ = H, Alkali- und/oder Ammoniumionen) sind verwendbar als Gipsabbindemittel oder Komplexierungsmittel, insbesondere für Metallionen wie Eisen- oder Erdalkali-ionen. Sie können daher für die Wasserenthärtung eingesetzt werden. Bevorzugt sind hierfür Verbindungen mit $m+n+p+q \geq 2$.

Auch als flammhemmende Mittel, insbesondere im Vorstrich von Florteppichen, besitzen die Verbindungen der Formel I günstige Eigenschaften.

Insbesondere sind jedoch die am Phosphor veresterten oder alkylierten Carbonsäureamide, bevorzugt in mono- oder di-methylolysierter Form, wenn in Formel I R = ggf. halogensubst. $(C_1—C_{20})$-, vorzugsweise $(C_1—C_4)$-Alkylreste und $R_2$ sowie ggf. auch $R_2' = CONH_{2-x}(CH_2OH)_x$ (x = 1 oder 2), verwendbar für flammhemmende Ausrüstungen von cellulosehaltigem Material, insbesondere Textilien.

Die folgenden Beispiele sollen der weiteren Erläuterung der Erfindung dienen, ohne diese jedoch in irgendeiner Weise zu beschränken.

Beispiel 1

*3,3-Di-(methylphosphinsäure-isopropylester)-pimelinsäuredimethylester*

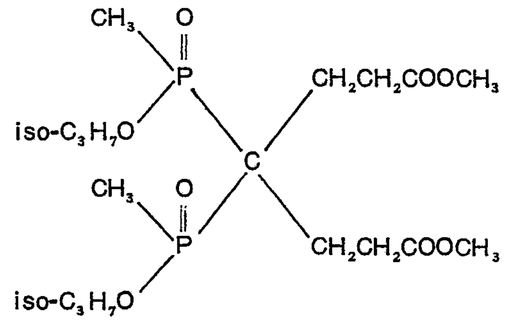

Zu einer Mischung aus 128 g (0,5 Mol) Methan-di-(methylphosphinsäure-isopropylester) und 86 g (1,0 Mol) Acrylsäuremethylester werden bei Raumtemperatur unter Rühren langsam 5 g einer 33%igen Natriummethylatlösung in Methanol eingetropft. Die Reaktion verläuft exotherm. Durch Kühlung wird die Innentemperatur auf maximal +60°C begrenzt. Nach beendetem Zutropfen wird das Gemisch noch 5 Stunden auf +60°C gehalten und dann im Vakuum von flüchtigen Anteilen befreit. Ausbeute: 205 (96% d. Th.).

Analyse: $C_{17}H_{34}O_8P_2$ MG 428

ber.: C 47,6%; H 7,9%; P 14,4%
gef.: C 47,2%; H 8,0%; P 14,3%

Beispiel 2

*3-Dimethylphosphinoxido-3-diäthylphosphono-pimelinsäurediäthylester*

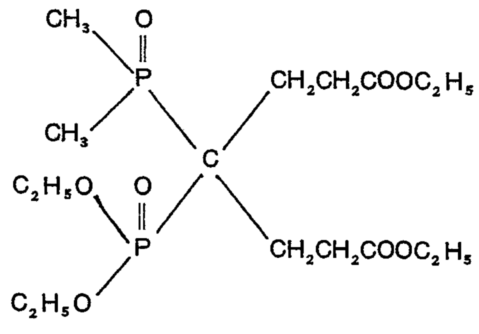

Entsprechend dem Beispiel (1) werden zu einer Mischung aus 114 g (0,5 Mol) Methan-dimethylphosphinoxido-phosphonsäure-diäthylester, 200 ml absolutem Dioxan und 100 g (1,0 Mol) Acrylsäureäthylester bei 40°C langsam 10 g einer 33%igen Natriummethylatlösung in Methanol eingetropft. Nach entsprechender Aufarbeitung verbleiben 197 g einer farblosen Flüssigkeit (92% d. Th.).

Analyse: $C_{17}H_{34}O_8P_2$ MG 428

ber.: C 47,6%; H 7,9%; P 14,4%
gef.: C 46,6%; H 7,9%; P 14,8%

Beispiel 3

*3,3-Di-(methylphosphinsäure-isopropylester)-pimelinsäuredinitril*

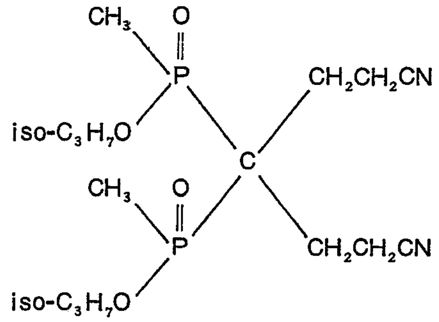

Zu einer Mischung aus 128 g (0,5 Mol) Methan-di-(methylphosphinsäure-isopropylester), 100 ml absolutem Toluol und 53 g (1,0 Mol) Acrylnitril werden bei Raumtemperatur unter Rühren langsam 5 g einer 33%igen Natriummethylatlösung in Methanol getropft. Die Reaktion verläuft stark exotherm. Die Innentemperatur wird durch Kühlung auf maximal +60°C gehalten. Anschließend wird noch 1 Stunde bei +50°C nachgerührt und im Vakuum andestilliert. Der verbleibende Rückstand wird nach Aufnehmen in 200 ml Chloroform mit etwas Aktivkohle behandelt, die Lösung filtriert und das Lösungsmittel im Vakuum entfernt. Es verbleiben 172 g eines farblosen Oeles (95% d. Th.), welches langsam kristallisiert.

Analyse: $C_{15}H_{28}N_2O_4P_2$ MG 362

ber.: C 49,7%; H, 7,7%; N 7,7%; P 17,1%
gef.: C 50,0%; H 7,5%; N 7,5%; P 17,0%

Beispiel 4

*3-Dimethylphosphinoxido-3-diäthylphosphono-pimelinsäuredinitril*

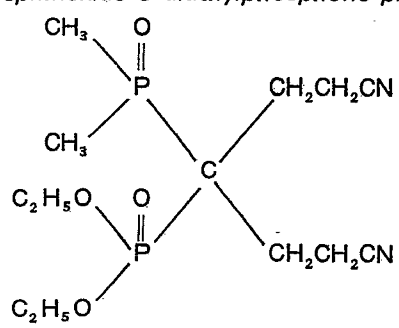

Analog dem Beispiel (3) werden 114 g (0,5 Mol) Methan-dimethylphospinoxido-phosphonsäurediäthylester in 200 ml absolutem Dioxan mit 53 g (1,0 Mol) Acrylnitril und 10 g einer 33%igen Natriummethylatlösung in Methanol bei maximal 60°C umgesetzt. Nach Aufarbeitung verbleiben 160 g (96% d. Th.) eines gelblich gefärbten Oeles.

Analyse: $C_{13}H_{24}N_2O_4P_2$ MG 334

ber.: C 46,7%; H 7,1%; N 8,3%; P 18,5%
gef.: C 46,2%; H 6,9%; N 8,5%; P 18,3%

Beispiel 5

*3,3-Di-(methylphosphinsäureisopropylester)-pimelinsäuredicarbonamid*

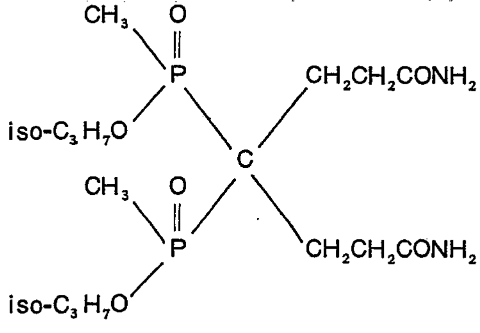

In eine Mischung aus 181 g (0,5 Mol) 3,3-Di-(methylphosphinsäureisopropylester)-pimelinsäuredinitril, 500 ml 95%igem Aethanol und 40 ml 6n Natronlauge werden innerhalb von 60 Minuten 400 ml 30%ige $H_2O_2$-Lösung eingetropft. Die Reaktion verläuft exotherm, durch außenkühlung wird die Temperatur unter +35°C gehalten. Anschließend wird noch 3 Stunden bei Raumtemperatur nachgerührt. Nach dem Neutralisieren mit Eisessig wird die Lösung filtriert und das Filtrat im Vakuum vom Lösungsmittel befreit. Der verbleibende Rückstand wird mit 200 ml Aceton heiß ausgerührt. Der verbleibende Festkörper wird abgetrennt und getrocknet. Ausbeute: 170 g Festkörper (85% d. Th.); Fp. 117°—120°C.

Analyse: $C_{15}H_{32}N_2O_6P_2$ MG 398

ber.: C 45,2%; H 8,0%; N 7,0%; P 15,5%
gef.: C 45,0%; H 8,3%; N 6,8%; P 15,2%

Beispiel 6

*3,3-Di-(phosphonodiäthyl)-pimelinsäuredicarbonamid*

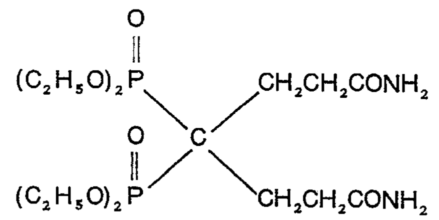

In eine Mischung aus 197 g (0,5 Mol) 3,3-Di-(phosphonodiäthyl)-pimelinsäuredinitril, 550 ml 95%igem Aethanol und 40 ml 6n Natronlauge werden innerhalb von 60 Minuten 400 ml 30%ige $H_2O_2$-Lösung eingetropft. Die Reaktion verläuft exotherm, durch Außenkühlung wird die Temperatur unter +35°C gehalten. Anschließend wird noch 3 Stunden bei Raumtemperatur nachgerührt. Nach dem Neutralisieren mit Eisessig wird die Lösung filtriert und das Filtrat im Vakuum vom Lösungsmittel befreit, der verbleibende Rückstand wird mit 200 ml Aceton heiß ausgerührt. Der verbleibende Festkörper wird abgetrennt und getrocknet. Ausbeute: 168 g (78% d. Th.); Fp. 202°—204°C.

Beispiel 7

*3,3-Di-(phosphonodiäthyl)-pimelinsäurecarbonamid*

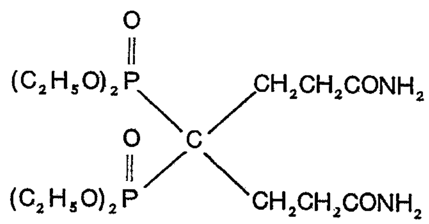

In eine auf 0°C gehaltene gekühlte Lösung von 230 g (0,5 Mol) 3,3-Di-(phosphonodiäthyl)-pimelinsäuredimethylester werden langsam 25,5 g (1,5 Mol) Ammoniak eingeleitet. Das Reaktionsgemisch wird nach dem Ueberführen in einen Stahlautoklaven 20 Stunden auf 55°—60°C erwärmt. Nach dem Abkühlen wird das Lösungsmittel im Vakuum entfernt und der verbleibende Rückstand mit 200 ml Aceton ausgekocht. Der ausfallende Festkörper wird abgetrennt und getrocknet. Ausbeute: 183 g (% d. Th.); Fp. 204°—205°C.

Analyse: $C_{15}H_{32}N_2O_8P_2$ MG 430

ber.: C 41,8%; H 7,4%; N 6,5%; P 14,4%
gef.: C 42,2%; H 7,2%; N 6,4%; P 14,4%

Beispiel 8

*3,3-Di-(methylphosphino)-pimelinsäure*

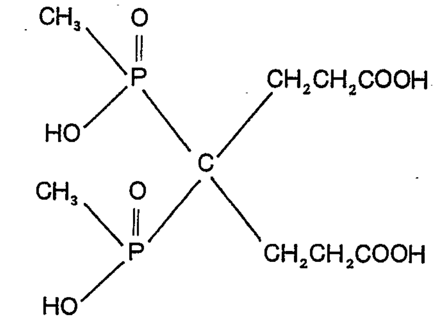

428 g (1,0 Mol) 3,3-Di-(methylphosphinsäure-isopropylester)-pimelinsäuredimethylester werden mit 2000 ml konzentrierter Salzsäure 15 Stunden unter Rückflußbedingungen gekocht. Flüchtige Anteile werden anschließend im Vakuum abgezogen, der Rückstand mit 500 ml Eisessig versetzt und auf Raumtemperatur gekühlt. Nach ca. 10-stündigem Stehen wird das kristalline Material abgetrennt und getrocknet. Ausbeute: 281 g (89% d. Th.); Fp. 187°—190°C.

Analyse: $C_9H_{18}O_8P_2$ MG 316

ber.: C 34,1%; H 5,7%; P 19,6%
gef.: C 34,0%; H 5,4%; P 20,1%

Beispiel 9

*3-Dimethylphosphinoxido-3-phosphono-pimelinsäure*

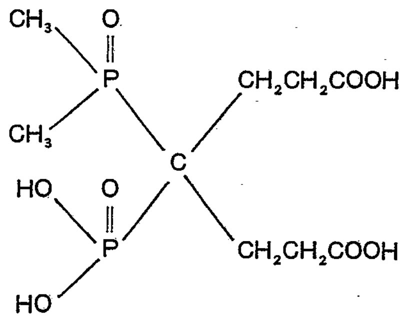

214 g (0,5 Mol) 3-Dimethylphospinoxido-3-diäthylphosphono-pimelinsäurediäthylester werden mit 1000 ml konzentrierter Salzsäure 20 Stunden unter Rückflußbedingungen gekocht. Anschließend werden flüchtige Anteile am Rotationsverdampfer im Vakuum bei 120°C entfernt. Als Rückstand verbleibt eine glasig erstarrende Masse, die nach mehrfachem Auskochen mit Isopropanol kristallisiert. Der Festkörper wird abgetrennt und getrocknet. Ausbeute: 140 g (88,6% d. Th.); Fp. 128°—130°C.

Analyse: $C_9H_{18}O_8P_2$ MG 316

ber.: C 34,1%; H 5,7%; P 19,6%
gef.: C 33,8%; H 5,5%; P 20,0%

Beispiel 10

*3-Dimethylphosphinoxido-3-methylphosphinoäthyl-pimelinsäuredinitril*

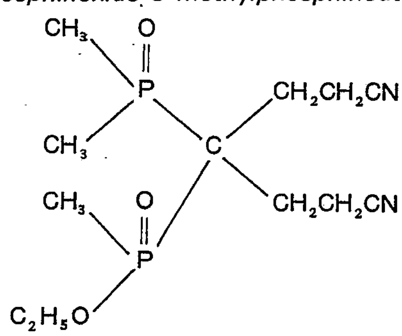

Zu einer Mischung aus 99 g (0.5 Mol) Methandimethylphosphinoxidomethylphosphinsäureäthylester, 100 m abs. Toluol und 53 g (1.0 Mol) Acrylnitril werden bei Raumtemperatur unter Rühren langsam 5 g einer 33%igen $NaOCH_3/CH_3OH$-Lösung getropft. Durch Außenkühlung wird die stark exotherme Addition auf maximal +60°C gehalten. Anschließend wird noch 1 Stunde bei 50°C nachgerührt, durch Zugabe von Aktivkohle geklärt und filtriert. Das Filtrat wird im Vakuum vom Lösungsmittel und flüchtigen Anteilen befreit. Es verbleiben 140 g (92% d. Th.) eines leicht gelblichen Öles.

Analyse: $C_{12}H_{22}N_2O_3P_2$ MG 304

ber.: C 47.3%; H 7.2%; P 20.4%
gef.: C 46.6%; H 7.0%; P 19.8%

Beispiel 11

*3-Dimethylphosphinoxido-3-methylphosphinoäthyl-pimelinsäurediäthylester*

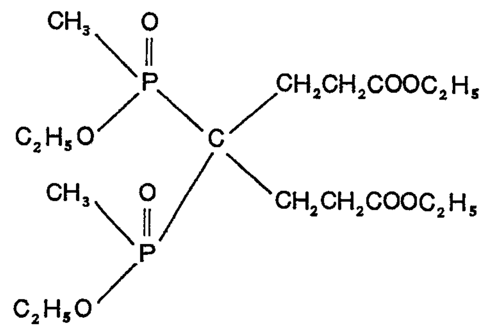

Zu einer Mischung aus 99 g (0.5 Mol) Methandimethylphosphinoxidomethylphosphinsäureäthylester und 100 g (1.0 Mol) Acrylsäureäthylester werden bei Raumtemperatur langsam unter Rühren 5 g einer 33%igen Natriumethylatlösung in Methanol eingetropft. Die Reaktion verläuft stark exotherm und wird durch Außenkühlung auf maximal +50°C begrenzt. Nach dem Zutropfen wird das Gemisch noch 5 Stunden bei 80—90°C gerührt und dann im Vakuum von flüchtigen Anteilen befreit. Ausbeute 190 g (95,4% d. Th.).

Analyse: $C_{16}H_{32}O_7P_2$ MG 398

ber.: C 48.2%; H 8.0%; P 15.5%
gef.: C 47.4%; H 7.8%; P 15.0%

Beispiel 12

*3-Dimethylphosphinoxido-3-methylphosphinopimelin-mono-Na-Salz*

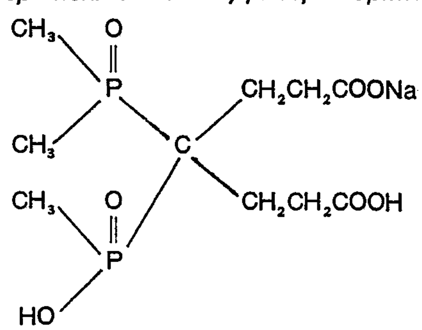

199 g (0.5 Mol) 3-Dimethylphosphinoxido-3-methylphosphinoäthylpimelinsäurediäthylester werden mit 1000 ml konz. Salzsäure 20 Stunden unter Rückfluß gekocht. Anschließend werden flüchtige Anteile am Rotationsverdampfer im Vakuum bei maximal +120°C entfernt. Der verbleibende glasartige Rückstand wird in 500 ml Methanol aufgenommen und durch Zugabe von 82 g 33%iger $NaOCH_3/CH_3OH$-Lösung in das Natriumsalz überführt. Nach Einengen der Lösung wird das ausgefallene Produkt abgesaugt und getrocknet. Ausbeute 150 g (89% d. Th.).

Analyse: $C_{10}H_{19}O_7P_2Na$ MG 336

ber.: C 35.7%; H 5.6%; P 18.4%
gef.: C 34.9%; H 5.8%; P 18.0%

Beispiel 13

*3,3-Di-phenylphosphinoäthyl-pimelinsäuredinitril*

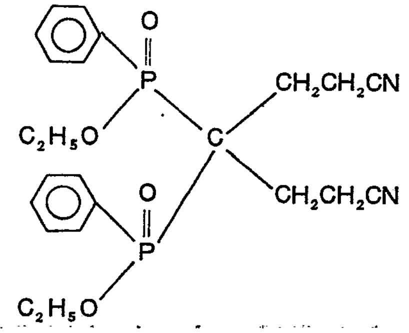

Analog Beispiel 10 wurden wurden 88 g (0.25 Mol) Methan-di-(phenylphosphinsäureäthylester) mit 26,5 g (0.5 Mol) Acrylnitril in 100 ml abs. Toluol und 2 g 33%iger $NaOCH_3/CH_3OH$-Lösung umgesetzt. Ausbeute 105 g (91.7% d. Th.).

Analyse: $C_{23}H_{28}N_2O_4P_2$ MG 336

ber.: C 60.2%; H 6.1%; P 13.5%; N 6.1%
gef.: C 61.0%; H 6.4%; P 12.9%; N 5.8%

Beispiel 14

*3,3-Di-phenylphosphinoäthyl-pimelinsäurediäthylester*

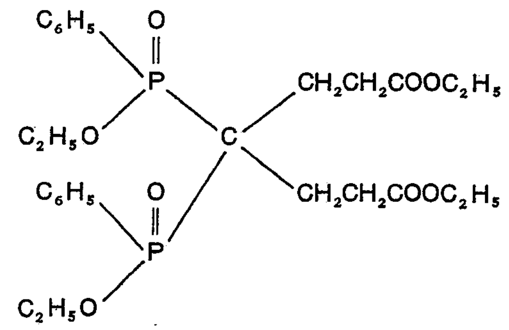

Wie in Beispiel Nr. 11 werden 88 g (0.25 Mol) Methan-di-(phenylphosphinsäureäthylester), 50 g (0.5 Mol) Acrylsäureäthylester und 2 g 33%iger $NaOCH_3/CH_3OH$-Lösung zur Reaktion gebracht. Nach Aufarbeitung erhält man 125 g eines gelben Öls (90.5% d. Th.).

Analyse: $C_{27}H_{38}O_8P_2$ MG 552

ber.: C 58.7%; H 6.9%; P 11.2%
gef.: C 58.0%; H 6.5%; P 11.9%

Beispiel 15

*3-Diphenylphosphinoxido-3-phosphonodiäthyl-pimelinsäuredinitril*

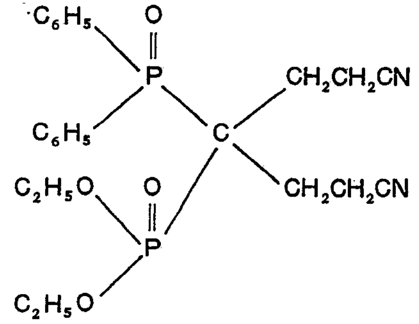

Wie vorstehend mehrfach beschrieben wurden 88 g (0.25 Mol) Methandiphenylphosphinoxidophosphonosäurediäthylester, 26,5 g (0.5 Mol) Acrylnitril mit 2 g 33%iger $NaOCH_3/CH_3OH$-Lösung in 100 ml abs. Toluol umgesetzt. Nach Aufarbeitung erhält man 100 g (87,3% d. Th.) eines farblosen Öles, das nach längerem Stehem erstarrt.

Analyse: $C_{23}H_{28}N_2O_4P_2$ MG 458

ber.: C 60.2%; H 6.1%; N 6.1%
gef.: C 59.2%; H 5.7%; N 6.5%

Beispiel 16

*1-Carbäthoxypropan-2-dimethylphosphinoxido-3-phosphonsäurediäthylester*

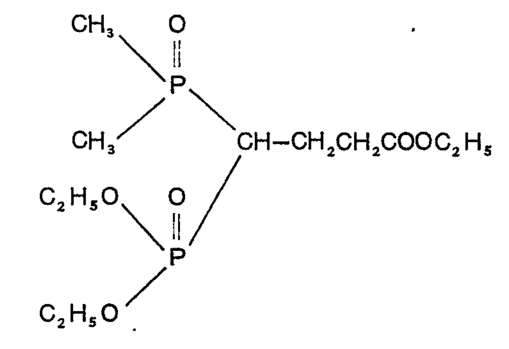

Zu einem Gemisch aus 12 g (0.5 Mol) NaH in 200 ml abs. Toluol werden in einer Stickstoffatomosphäre bei Raumtemperatur langsam 114 g (0.5 Mol) Methan-dimethylphosphinoxidophosphonsäurediäthylester getropft. Das Gemisch wird anschließend solange bei Raumtemperatur gerührt, bis das NaH umgesetzt ist. Anschließend werden langsam 50 g (0.5 Mol) Acrylsäureäthylester under Außenkühlung bei 40—50°C eingetropft. Nach 2-stündigem Rühren bei 50°C wird das Gemisch durch vorsichtiges Eintropfen von konz. Salzsäure neutral gestellt und filtriert. Das Filtrat wird im Vakuum von flüchtigen Anteilen befreit und liefert 130 g (97% d. Th.) eines farblosen Öles.

Analyse: $C_{12}H_{26}O_6P_2$ MG 328

ber.: C 43.9%; H 7.9%; P 18.9%
gef.: C 42.9%; H 7.5%; P 19.4%

Anwendungsbeispiele

$A_I$ *Gipsabbindeverzögerung*

Prüfmethode: Vicat-Methode nach DIN 1168

Wasserwert des Gipses: 0,60

| Testprodukt | Zusatzmenge in Gew.-% | Abbindezeit des Studegips Kelle Beginn | Ende |
|---|---|---|---|
| 3-Dimethoxyphosphin-oxido-3-phosphono-pimelinsäure (erfindungsgemäß) | 0.05 | 330 Min. | 360 Min. |
| | 0.10 | nach ca. 30 Stdn. noch kein Abbindebeginn | |
| Zitronensäure | 0.075 | 140 Min. | 155 Min. |
| (Vergleich) | 0.10 | 170 Min. | 187 Min. |

$B_I$ *Flammschutz*

Beispiel B1

Ein Baumwollgewebe, köperbindig, mit einem Quadratmetergewicht von 240 g, wird auf einem Zweiwalzenfoulard mit folgender Imprägnierlösung behandelt:

450 g/l eines Umsetzungsproduktes von 2 Molen Formaldehyd mit 3,3-Di-(phosphonidiäthyl)-pimelinsäuredicarbonamid (das Produkt enthält 9,8% Phosphor)

60 g/l Trimethylolmelamintrimethyläther (80%ig)

5 g/l Ammoniumchlorid.

Der Abquetscheffekt beträgt ca. 75%. Nach einer Vortrocknung bei 100°—110°C wird 4 Minuten bei 170°C kondensiert. Anschließend wird mit 2,3 g/l Soda 5 Minuten bei 90°C nachgewaschen und sehr gut warm und kalt bis zur Alkalifreiheit gespült und wieder bei 100°C getrocknet.

Das so behandelte Baumwollgewebe zeigt sehr gute flammhemmende Eigenschaften, die auch nach drei weiteren Maschinenkochwäschen mit 3 g/l eines handelsüblichen Waschmittels erhalten bleiben.

Nach DIN 53 906 brennt das unbehandelte Baumwollgewebe nach Wegnahme der Flamme weiter. Das behandelte Gewebe zeigt eine Einbrennlänge von 6 cm nach der Nachwäsche und 8 cm nach einer dreifachen Maschinenkochwäsche.

Der Warengriff ist nach der Nachwäsche weich und fließend.

Beispiel B2

Das im Beispiel 1 beschriebene Baumwollgewebe wird mit nachstehender Impränierlösung behandelt:

380 g/l eines Ammoniumsalzes der 3,3-Di-(methylphosphino)-pimelinsäure ($P = 11\%$)

40 g/l Hexamethylolmelaminpentamethyläther (50%ig)

3 g/l Ammoniumchlorid.

Der Abquetscheffekt auf einem Zweiwalzenfoulard beträgt ca. 70%. Nach der Vortrocknung bei 100°C wird 5 Minuten bei 150°C kondensiert.

Das behandelte Baumwollgewebe zeigt nach DIN 53 906 einen sehr guten flammhemmenden Effekt. Die Einbrennlänge beträgt 5 cm. Der Flammhemmende Effekt überdauert 5 chemische Reinigungen. Zu gleich guten Effekten kommt man, wenn man

450 g/l 3-Dimethylphosphinoxido-3-diäthylphosphono-pimelinsäure dinitril einsetzt.

Beispiel B3

Eine Nadelvliesauslegeware, die aus einem Polyesterfaserkern und aus einer Polyamidlauffläche im Mischungsverhältnis 65:35 besteht, wird auf einem Zweiwalzenfoulard (Abquetscheffekt ca. 105%) mit einer wäßrigen Lösung folgender Zusammensetzung behandelt:

400 g/l eines Umsetzungsproduktes von 2,0 Molen Formaldehyd mit 3,3-Di-(phosphonodiäthyl)-pimelinsäure dicarbonamid (das Produkt enthält 9,8% Phosphor),

50 g/l Trimethylolmelamintrimethyläther (80%ig)

5 g/l Ammoniumchlorid

300 g/l einer 40%igen Kunststoffdispersion aus Äthylacrylat/Acrylnitril/N-Methylolacrylamid im Verhältnis 6:3:1.

Die so behandelte Nadelvliesauslegeware wird anschließend 30 Minuten bei 145°C getrocknet.

Die Nadelvliesauslegeware zeigt eine gute Formstabilität und ein gutes Abrollvermögen.

Der Nadelvlies zeigt nach DIN 54 333 sehr gute flammhemmende Eigenschaften.

Wird ein Prüfling des oben beschriebenen Nadelvlieses mit einem Quadratmetergewicht von 750 g nur mit 300 g/l der 40%igen Kunststoffdispersion behandelt, so brennt er nach Wegnahme der Flamme in breiter Front weiter. Die Flammfront durchläuft in einer Zeit von 2 Minuten und 55 Sekunden die Prüfstrecke von 10 cm.

Die erfindungsgemäß ausgerüstete Nadelvliesauslegeware brennt dagegen nach Wegnahme der Prüfflamme nicht weiter. Außerhalb der Prüfstrecke konnte lediglich ein Nachflammen von 8—10 Sekundenfestgestellt werden. Nach 3 Shampoonierungen bleiben die flammhemmenden Eigenschaften des Nadelvlieses voll erhalten. Die Nachflammzeit hat sich lediglich auf 1 Minute und 15 Sekunden erhöht.

**Patentansprüche**

1. Phosphorhaltige Carbonsäure-Derivate der allgemeinen Formel

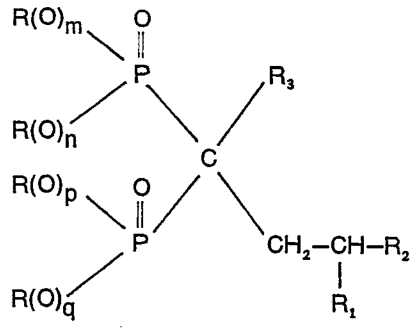

(I)

in der

$R$ = gleiche oder verschiedene Reste aus der Gruppe H, ($C_1$—$C_{20}$)-Alkyl, ($C_2$—$C_8$)-Alkenyl, beide gegebenenfalls substituiert, vorzugsweise bis zu dreimal, insbesondere einmal durch Halogen, insbesondere Cl, Br, ($C_5$—$C_6$)-Cycloalkyl, Phenyl oder Phen-($C_1$—$C_4$)-alkyl, beide gegebenenfalls im Ring substituiert, vorzugsweise bis zu dreimal substituiert, durch Halogen (vorzugsweise Cl, Br) oder ($C_1$—$C_4$)-Alkyl, ein Alkali- oder Ammonium-Kation, vorzugsweise Na, K, wobei jedoch R nicht H oder ein Kation ist, wenn das zugehörige m, n, p oder $q = 0$ ist,

$R_1 = H$, ($C_1$—$C_4$)-Alkyl,

$R_2 = CN$, $COOR_4$, $CONR_5R_6$, $CONH_{2-x}(CH_2OH)_x$ ($x = 1$ oder 2),

$R_3 = H$ oder eine Gruppe

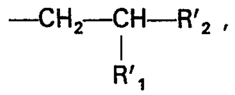

in der $R'_1$ und $R'_2$ Bedeutungen wie für $R_1$ und $R_2$ beschrieben besitzen,

$R_4$ = Bedeutungen, wie für R beschrieben, hat und

$R_5$, $R_6$ = H, ($C_1$—$C_{20}$)-Alkyl oder Phenyl, beide gegebenenfalls durch Halogen, vorzugsweise Cl, Br, und/oder ($C_1$—$C_4$)-Alkyl substituiert, vorzugsweise bis zu dreimal substituiert, und

m, n, p, q = unabhängig voneinander die Zahlen 0 oder 1 bedeuten, mit der Einschränkung, daß für $R_2 = CN$ oder $COOR_4$ nicht alle, m, m, p, $q = 1$ sein dürfen sowie daß für den Fall $R = C_6H_5$ und $m = n = p = q = 0$ $R_3 \neq H$.

2. Verbindungen nach Anspruch 1, bei denen die Reste, R, $R_4$, $R_5$ und $R_6$ nur = H oder Alkylgruppen sind.

3. Verbindungen nach Anspruch 1—2, bei denen die Reste R, $R_1$, $R_4$, $R_5$ und $R_6$ Alkylgruppen mit 1—4 C-Atomen, insbesondere Methyl- oder Aethylgruppen, sowie die Chloräthylgruppe sind.

4. Verbindungen nach Anspruch 1—3, bei denen die Reste $R_2$ und gegebenenfalls auch $R'_2 = CN$, $CONH_2$ oder $CONH_{2-x}(CH_2OH)_x$ ($x = 1$ oder 2) sind.

5. Verfahren zur Herstellung der Verbindungen der Formel I, dadurch gekennzeichnet, daß man Verbindungen der allgemeinen Formel

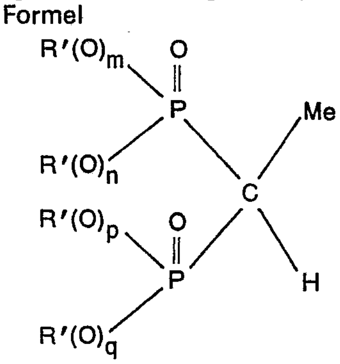

(II)

in der

$R' = R$ aber $\neq H$;

m, n, p, q unabhängig voneinander 0 oder 1 und

Me Wasserstoff oder ein Alkaliatom (vorzugsweise Li, Na) bedeutet,

gegebenenfalls in einem inerten Lösungsmittel mit Verbindungen der Formel

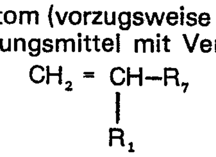

(III)

in der $R_1$ die Bedeutung aus Formel I hat und $R_7$ CN, $COOR_4$, $CONR_5R_6$, vorzugsweise CN oder $COOR_4$ bedeutet, gegebenenfalls (für Me = H) in Gegenwart stark basischer Katalysatoren, bei Temperaturen von ca. 0° bis 140°C umsetzt, eine dabei erhaltene Verbindung mit einer C—Me-Gruppierung (Me = Alkali) zu einer Verbindung mit einer C—H-Gruppierung verseift und gegebenenfalls, aber jedenfalls für m = n = p = q = 1, eine Nitril- oder Carbonestergruppe in an sich bekannter Weise in eine andere Gruppe $R_2$, vorzugsweise eine, gegebenenfalls N-substituierte, Carbonamid-Gruppe überführt und gegebenenfalls die so erhaltene Carbonamid-Gruppe mit Formaldehyd methylolisiert.

6. Verwendung der in den Ansprüchen 1—4 spezifizierten Verbindungen, bei denen die Reste R und $R_4$ nur die in diesen Ansprüchen angegebenen organischen Gruppen bedeuten, als Weichmacher für Kunststoffe, insbesondere für Polyvinylchlorid.

7. Verwendung der Verbundungen nach Anspruch 1, bei denen die Reste R und $R_4$ = H, Alkali und/oder Ammoniumionen sind, als Gipsabbindeverzögerer oder Komplexbildner für Metallionen.

8. Verwendung der Verbindungen nach Anspruch 1, bei denen die Reste R = gegebenenfalls halogensubstituierte ($C_1$—$C_{20}$)-Alkylreste und $R_2$ sowie gegebenenfalls auch $R'_2 = CONH_{2-x}(CH_2OH)_x$ (x = 1 oder 2), zur Flammfestausrüstung für cellulosehaltige Materialien, insbesondere Textilien.

**Revendications**

1. Dérivés d'acides carboxyliques phosphorés répondant à la formule générale I

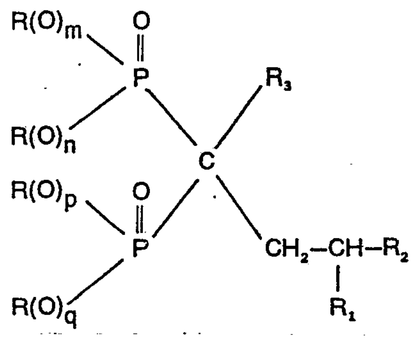

(I)

dans laquelle

les R représentent chacun, indépendamment les uns des autres:

— un atome d'hydrogène,

— un radical alkyle en $C_1$—$C_{20}$ ou un radical alcényle en $C_2$—$C_8$, chacun des radicaux de ces deux types pouvant porter un ou des substituants, de préférence au plus trois, plus particulièrement un seul qui est un halogène, surtout Cl ou Br,

— un radical cycloalkyle en $C_5$ ou $C_6$,

— un radical phényle ou un radical phényl-($C_1$—$C_4$)alkyle, chacun des radicaux de ces deux derniers types pouvant porter un ou des substituants sur le noyau, de préférence au plus trois, qui sont pris dans l'ensemble constitué par les halogènes, de préférence Cl ou Br, et les alkyles en $C_1$—$C_4$, ou

— un cation de métal alcalin ou d'ammonium, de préférence Na ou K,

mais R ne pouvant représenter H ou un cation dans le cas où l'indice m, n, p ou q correspondant est égal à 0,

$R_1$ représente H ou un radical alkyle en $C_1$—$C_4$,

$R_2$ représente CN, $COOR_4$, $CONR_5R_6$ ou $CONH_{2-x}(CH_2OH)_x$ (l'indice x étant égal à 1 ou à 2),

$R_3$ représente H ou un radical

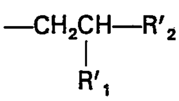

dans lequel $R'_1$ et $R'_2$ ont des significations telles que celles qui ont été données pour $R_1$ et $R_2$,

$R_4$ a des significations identiques à celles qui ont été données pour R,

$R_5$ et $R_6$ représentent chacun un atome d'hydrogène, un radical alkyle en $C_1$—$C_{20}$ ou un radical phényle, chacun des radicaux de ces deux derniers types pouvant porter un substituant, de préférence au plus trois, pris dans l'ensemble constitué par les halogènes (de préférence Cl et Br) et les radicaux alkyles en $C_1$—$C_4$, et

m, n, p et q représentent chacun, indépendamment les uns des autres le nombre 0 ou le nombre 1, avec la restriction que, dans le cas où $R_2$ représente CN ou $COOR_4$, les indices m, n, p et q ne soient pas tous égaux à 1 et que, dans le cas où R désigne un radical $C_6H_5$ et m = n = p = q = 0, $R_3$ ne soit pas l'hydrogène.

2. Composés selon la revendication 1, dans lesquels R, $R_4$, $R_5$ et $R_6$ ne peuvent représenter chacun que H ou un radical alkyle.

3. Composés selon l'une des revendications 1 et 2, dans lesquels R, $R_1$, $R_4$, $R_5$ et $R_6$ représentent

chacun un radical alkyle en $C_1$—$C_4$, plus particulièrement un radical méthyle ou éthyle, ou un radical chloréthyle.

4. Composés selon l'une quelconque des revendications 1 à 3, dans lesquels $R_2$ et éventuellement aussi $R'_2$ représentent CN, $CONH_2$ ou $CONH_{2-x}(CH_2OH)_x$, l'indice x étant égal à 1 ou à 2.

5. Procédé de préparation de composés de formule I, procédé caractérisé en ce qu'on fait réagir des composés de formule générale

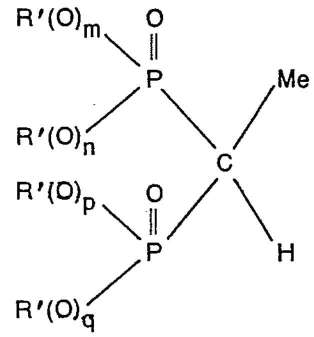

(II)

dans lesquels R' = R mais ≠ H, m, n, p et q représentent chacun, indépendamment les uns des autres, le nombre 0 ou le nombre 1 et Me représente l'hydrogène ou un atome de métal alcalin (de préférence Li ou Na), éventuellement dans un solvant inerte, avec des composés de formule

$$CH_2 = \underset{\displaystyle R_1}{\underset{|}{C}}H-R_7 \qquad (III)$$

dans lesquels $R_1$ a la signification donnée à la revendication 1 et $R_7$ représente CN, $COOR_4$ ou $CONR_5R_6$, de préférence CN ou $COOR_4$, éventuellement (lorsque Me = H) en présence de catalyseurs très basiques, à des températures d'environ 0 à 140°C, on saponifie un composé ainsi obtenu renfermant un groupement C—Me (Me = métal alcalin) de manière à la convertir en un composé renfermant un groupement C—H, et éventuellement, mais obligatoirement lorsque m = n = p = q = 1, on transforme un groupe nitrile ou ester carboxylique, de manière connue, en un autre groupe $R_2$, de préférence en un groupe carbamoyle éventuellement substitué à l'azote, et, le cas échéant, on méthylole avec du formaldéhyde le groupe carbamoyle ainsi obtenu.

6. Utilisation des composés spécifiés à l'une quelconque des revendications 1 à 4 dans lesquels R et $R_4$ ne représentent que les radicaux organiques indiqués dans ces revendications, comme plastifiants pour matières plastiques, plus spécialement pour le polychlorure de vinyle.

7. Utilisation des composés selon la revendication 1 dans lesquels R et $R_4$ représentent H, des ions de métaux alcalins et/ou des ions d'ammonium, comme retardateurs de prise pour le plâtre ou comme complexants pour ions métalliques.

8. Utilisation des composés selon la revendication 1 dans lesquels les R représentent des radicaux alkyles en $C_1$—$C_{20}$ éventuellement halogénés, et $R_2$ ainsi qu'éventuellement $R'_2$ représentent $CONH_{2-x}(CH_2OH)_x$ (x = 1 ou 2), pour l'apprêtage ignifuge de matières contenant de la cellulose, plus spécialement de textiles.

**Claims**

1. Phosphorus-containing carboxylic acid derivates of the formula

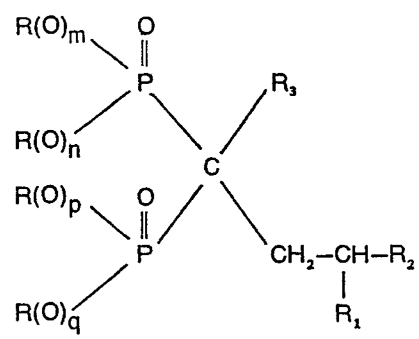

(I)

in which

R, which may be the same or different, are radicals selected from the group consisting of H, $(C_{1-20})$-alkyl, $(C_{2-8})$-alkyenyl, both radicals being optionally substituted, preferably up to three times, especially once, by halogen, especially chloride or bromine,

$(C_{5-6})$-cycloalkyl, phenyl or phen$(C_{1-4})$-alkyl, said radicals being optionally substituted in the ring, preferably up to three times, by halogen, preferably chlorine or bromine, or $(C_{1-4})$-alkyl,

an alkali metal or ammonium, preferably sodium or potassium, cation, but R cannot be H or a cation, if the pertinent m, n, p or q is 0,

$R_1$ is H, $(C_{1-4})$-alkyl,

$R_2$ is CN, $COOR_4$, $CONR_5R_6$, $CONH_{2-x}(CH_2OH)_x$, with x being 1 or 2,

$R_3$ is H or the group

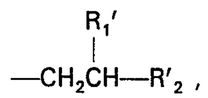

with $R'_1$ and $R'_2$ having the same meaning as $R_1$ and $R_2$

$R_4$ has the meaning given for R, and

$R_5$, $R_6$ is H, $(C_{1-20})$-alkyl or phenyl, both radicals being optionally substituted by halogen, preferably chlorine or bromine, and/or $(C_{1-4})$-alkyl, preferably up to three times, and

m, n, p, q independent from each other are 0 or 1, with the restriction that, if $R_2$ is CN or $COOR_4$, all members of the group m, n, p, q cannot be 1, and that for $R = C_6H_5$ and $m = n = p = q = 0$, $R_3 \neq H$.

2. Compounds as claimed in Claim 1, in which the radicals R, $R_4$, $R_5$ and $R_6$ are only H or alkyl groups.

3. Compounds as claimed in Claims 1 to 2, in which the radicals R, $R_1$, $R_4$, $R_5$ and $R_6$ are alkyl groups having of from 1 to 4 carbon atoms, especially methyl or ethyl groups, and the chloroethyl group.

4. Compounds as claimed in Claims 1 to 3, in which the radicals $R_2$ and optionally $R'_2$ are CN, $CONH_2$ or $CONH_{2-x}(CH_2OH)_x$ with x being 1 or 2.

5. Process for the preparation of the compounds of the formula I, characterized by reacting compounds of the formula

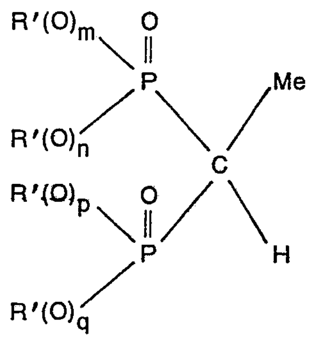

(II)

in which R′ is R, but not H; m, n, p, q independent from each other are 0 or 1, and Me is hydrogen or an alkali metal atom, preferably lithium, and sodium, optionally in an inert solvent, with compounds of the formula

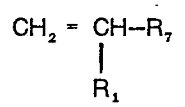

(III)

in which $R_1$ has the same meaning as in formula I, and $R_7$ is CN, $COOR_4$, $CONR_5R_6$, preferably CN, $COOR_4$, optionally, if Me is H, in the presence of highly basic catalysts, at a temperature of from about 0° to 140°C, saponifying a compound obtained in this process which contains a C—Me grouping with Me being an alkali metal, to yield a compound which contains a C—H-grouping and optionally, but in any event if m=n=p=q=1, converting a nitrile or carboxylic acid ester group in known manner into an other group $R_2$, preferably a carboxylic amide group, optionally N-substituted, and optionally methylolizing the carboxylic amide group obtained with formaldehyde.

6. Method of using the compounds as claimed in Claims 1 to 4, in which the radicals R and $R_4$ only denote the organic radicals indicated in these claims, as plasticizers for plastics, especially for polyvinyl chloride.

7. Method of using the compounds as claimed in Claim 1, in which the radicals R and $R_4$ are H, alkali metal and/or ammonium ions, as gypsum-setting retarding agents or complexing agents for metal ions.

8. Method of using the compounds as claimed in Claim 1, in which the radicals R are optionally halogen-substituted $(C_{1-20})$-alkyl radicals, and $R_2$ and optionally $R'_2$ are $CONH_{2-x}(CH_2OH)_x$, with x being 1 or 2, for flameproofing cellulose-containing materials, especially textiles.